(19) Europäisches Patentamt

European Patent Office

Office européen des brevets

(11) Veröffentlichungsnummer: **0 332 895**

**A2**

## (12) EUROPÄISCHE PATENTANMELDUNG

(21) Anmeldenummer: **89103109.8**

(22) Anmeldetag: **22.02.89**

(51) Int. Cl.⁴: **B26D 7/30**

(30) Priorität: **16.03.88 DE 3808790**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **Weber, Günther**
**Oberer Birkenweg 17b**
**D-3560 Biedenkopf-Wallau(DE)**

(72) Erfinder: **Weber, Günther**
**Oberer Birkenweg 17b**
**D-3560 Biedenkopf-Wallau(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heijn**
**B.Sc.(Phys.) Morgan**
**Robert-Koch-Strasse 1**
**D-8000 München 22(DE)**

(54) **Verfahren zur Gewinnung gewichtskonstanter Portionen oder Scheiben aus aufgeschnittenen Lebensmittelprodukten.**

(57) Es wird ein Verfahren zur Gewinnung gewichtskonstanter Portionen oder Scheiben aus aufgeschnittenen Lebensmittelprodukten beschrieben, bei dem im Echtzeitbetrieb während des Aufschnittvorgangs durch Schnittflächenerfassung, Berücksichtigung des spezifischen Gewichtes und Vorschuberrechnung jeweils Einzelscheiben oder Portionen aus mehreren Scheiben von exakt vorgebbarem Gewicht gebildet werden können.

EP 0 332 895 A2

### Verfahren zur Gewinnung gewichtskonstanter Portionen oder Scheiben aus aufgeschnittenen Lebensmittelprodukten

Die Erfindung betrifft ein Verfahren zur Gewinnung gewichtskonstanter Portionen oder Scheiben aus aufgeschnittenen Lebensmittelprodukten, insbesondere von Lebensmittelprodukten mit über deren Länge unterschiedlicher Umfangskontur, bei dem in Abhängigkeit vom gewünschten Sollgewicht vom aufzuschneidenden Produktstück eine Anzahl von Scheiben abgetrennt und in Abhängigkeit von Abweichungen vom Sollgewicht der Vorschub des jeweils aufzuschneidenden Produktstücks verändert wird.

Bei vielen bekannten Verfahren ist es üblich, gebildete Portionen oder Scheiben erst dann gewichtsmäßig zu erfassen bzw. zu wiegen, wenn eine Gewichtskorrektur des betreffenden Stapels zumindest automatisch nicht mehr möglich ist. Abgesehen davon, daß zur Vermeidung von unzulässigem Mindergewicht in diesen Fällen immer mit einem Sicherheitszuschlag gearbeitet werden muß, der sich wirtschaftlich ausgesprochen negativ auswirkt, ist auch ungünstig, daß nach erfolgter Feststellung von zu großen Gewichtsabweichungen die erforderliche Korrektur stets nur mit einer erheblichen Verzögerung durchführbar ist. Dies führt wiederum entweder zu einem entsrpechenden Verlust an aufzuschneidendem Produkt oder erfordert die personalintensive Aussonderung von mindergewichtigen Portionen oder Scheiben. Aufgabe der vorliegenden Erfindung ist es, ein Verfahren der eingangs angeführten Art zu schaffen, das es ermöglicht, das Sollgewicht der jeweiligen Portion oder Scheibe praktisch exakt zu erreichen, und zwar ohne Beeinträchtigung der Arbeitsgeschwindigkeit bei der Bildung von Portionen oder Scheiben.

Gelöst wird diese Aufgabe nach der Erfindung im wesentlichen dadurch, daß während des Aufschnittvorgangs zumindest zeitweise jeweils die Größe der freiliegenden Schnittfläche bestimmt und aus der Schnittflächengröße sowie dem spezifischen Gewicht des jeweils aufzuschneidenden Produktes unter Verwendung eines Computers der zur Erzielung des Sollgewichts erforderliche Vorschub zwischen zwei aufeinanderfolgenden Schnitten berechnet und als Steuergröße verwendet wird.

Durch die Ermittlung der jeweils freiliegenden Schnittfläche ist es in Kenntnis des spezifischen Gewichts des jeweils aufzuschneidenden Produktes möglich, praktisch im Zusammenhang mit jedem Schneidvorgang exakt den Produktvorschub zu berechnen, der zu einem bestimmten vorgebbaren Gewicht der jeweils abgeschnittenen Scheibe führt. Es wird damit eine Echtzeit-Schnittstärkensteuerung erhalten, die insbesondere unabhängig von der Querschnittsform des aufzuschneidenden Produktes Scheiben von definiertem Gewicht gewährleistet. Innerhalb einer Portion von bestimmtem Gewicht kann auf diese Weise entweder die Scheibenanzahl definiert vorgegeben oder auch die Scheibenstärke definiert gewählt werden, und zwar selbst dann, wenn sich die Querschnittsform des aufzuschneidenden Produktes stark verändert.

Die Erfassung der jeweils freiliegenden Schnittfläche erfolgt bevorzugt über eine Wellenreflexion, wobei ausgenützt wird, daß das Reflexionsverhalten der freiliegenden Schnitt fläche sich deutlich von dem Reflexionsverhalten des sich hinter der Schnittebene befindenden Produkts und auch der sonstigen Umgebung unterscheidet.

Besonders vorteilhafte Ausführungsformen der Erfassung der freiliegenden Schnittfläche sind in den Unteransprüchen angegeben.

Bei vielen Produkten ist das spezifische Gewicht über das Gesamtvolumen derart konstant, daß eine Korrektur während des Schneidvorgangs nicht erforderlich ist. Besteht ein Produkt jedoch aus verschiedenen Bestandteilen, die deutlich unterschiedliches spezifisches Gewichts besitzen, wie z.B. Fleisch- und Fettbereiche bei einem Schinken, dann wird vorzugsweise der jeweilige Anteil der unterschiedlichen Bestandteile an der freien Schnittfläche insbesondere wiederum durch das unterschiedliche Reflexionsverhalten ermittelt und bei der Gewichtsbestimmung eine entsprechende Echtzeit-Korrektur vorgenommen.

Das erfindungsgemäße Verfahren, das sich auch die extrem kurzen Signalverarbeitungszeiten der modernen Daten- und Computertechnik zunutze macht, erbringt nicht nur eine Maximierung der Ausbeute und damit eine entscheidende Verbesserung der Wirtschaftlichkeit des Schneideverfahrens, sondern es ermöglicht auch eine wesentlich Personalreduzierung, da die Vielzahl der bisher erforderlichen Kontroll, Überprüfungs-und Korrekturarbeiten nahezu vollständig entfällt.

### Ansprüche

1. Verfahren zur Gewinnung gewichtskonstanter Portionen oder Scheiben aus aufgeschnittenen Lebensmittelprodukten, insbesondere von Lebensmittelprodukten mit über deren Länge unterschiedlicher Umfangskontur, bei dem in Abhängigkeit vom gewünschten Sollgewicht vom aufzuschneidenden Produktstück eine Anzahl von Scheiben abgetrennt und in Abhängigkeit von Abweichungen vom Sollgewicht der Vorschub des jeweils aufzuschneidenden Produktstücks verändert wird,

dadurch **gekennzeichnet,**
daß während des Aufschnittvorgangs zumindest zeitweise jeweils die Größe der freiliegenden Schnittfläche be stimmt und aus der Schnittflächengröße sowie dem spezifischen Gewicht des jeweils aufzuschneidenden Produktes unter Verwendung eines Computers der zur Erzielung des Sollgewichts erforderliche Vorschub zwischen aufeinanderfolgenden Schnitten berechnet und als Steuergröße verwendet wird.

2. Verfahren nach Anspruch 1, dadurch **gekennzeichnet,** daß zur Erzielung eines vorgebbaren Sollgewichts einer Aufschnittmenge aus mehreren Scheiben der Vorschub in Abhängigkeit von aufsummierten Einzelscheibengewichten gesteuert wird.

3. Verfahren nach Anspruch 1 oder 2, dadurch **gekennzeichnet,** daß das spezifische Gewicht aus dem jeweils bereits aufgeschnittenen Produkt bestimmt und bei der Gewichtsberechnung zumindest diskontinuierlich korrigiert wird.

4. Verfahren nach einem der vorhergehenden Ansprüche, dadurch **gekennzeichnet,** daß die Größe der jeweils freiliegenden Schnittfläche durch Auswertung einer Wellenreflexion ermittelt wird.

5. Verfahren nach einem der vorhergehenden Ansprüche, dadurch **gekennzeichnet,** daß die Größe der jeweils freiliegenden Schnittfläche über eine Reflexionslichterfassung ermittelt wird.

6. Verfahren nach einem der vorhergehenden Ansprüche, dadurch **gekennzeichnet,** daß die Größe der freiliegenden Schnittfläche unter Verwendung einer das von der freiliegenden Schnittfläche kommende Reflexionslicht erfassenden Videokamera ermittelt wird.

7. Verfahren nach einem der vorhergehenden Ansprüche, dadurch **gekennzeichnet,** daß die Reflexionslichterfassung unter einem vorgebbaren Winkel bezogen auf die freiliegende Schnittfläche erfolgt und eine rechnerische Flächenkorrektur vorgenommen wird.

8. Verfahren nach einem der vorhergehenden Ansprüche, dadurch **gekennzeichnet,** daß die freiliegende Schnittfläche unter vorgebbarem Winkel durch eine Lichtquelle, insbesondere eine in einem vorgebbaren Wellenlängenbereich arbeitende Lichtquelle angestrahlt und das unter dem Reflexionswinkel auf die Kamera auftreffende Licht zur Flächenbestimmung verwendet wird.

9. Verfahren nach einem der vorhergehenden Ansprüche, dadurch **gekennzeichnet,** daß die freiliegende Schnittfläche zeilenmäßig abgetastet und aus der Länge der der freien Schnittfläche zugeordneten Einzelzeilen die Gesamtfläche ermittelt wird.

10. Verfahren nach einem der vorhergehenden Ansprüche, dadurch **gekennzeichnet,** daß die während des Messerdurchlaufs auftretenden Meßsignale ausgeblendet werden.

11. Verfahren nach einem der vorhergehenden Ansprüche, dadurch **gekennzeichnet,** daß die verschiedenen Bestandteile des aufzuschneidenden Produktes an der freiliegenden Schnittfläche flächenanteilsmäßig erfaßt und das ermittelte Anteilsverhältnis zur Korrektur des spezifischen Gewichts des Gesamtprodukts verwendet wird.

12. Verfahren nach Anspruch 11, dadurch **gekennzeichnet,** daß die verschiedenen Bestandteile über ihr unterschiedliches Reflexionsverhalten erfaßt werden.

13. Verfahren nach einem der vorhergehenden Ansprüche, dadurch **gekennzeichnet,** daß die Beendigung des Schneidvorgangs in Abhängigkeit von einem minimalen Schnittflächenwert festgelegt wird.